# EUROPEAN PATENT APPLICATION

(11) **EP 2 077 670 A1**
(43) Date of publication of application: **08.07.2009**
(21) Application number: 08776822.2
(22) Date of filing: 10.07.2008
(51) Int. Cl.: H04N 7/32

(54) **TRANSCODER, TRANSCODING METHOD, DECODER, AND DECODING METHOD**

(30) Priority: 11.07.2007 JP 2007182477
(71) Applicant: Panasonic Corporation, Kadoma-shi Osaka 571-8501 (JP)
(72) Inventor: MIYAUCHI, Shingo, c/o Panasonic Corp., IPROC, Chuo-ku, Osaka-shi, Osaka 540-6207 (JP); MATSUURA, Ryuji, c/o Panasonic Corp., IPROC, Chuo-ku, Osaka-shi, Osaka 540-6207 (JP)
(74) Representative: Ehlers, Jochen
(86) International application number: PCT/JP2008/001863
(87) International publication number: WO 2009/008177

(57) **Abstract**

The invention provides a transcoder and a transcoding method capable of quickly transcoding video data of different compressive encoding schemes without increasing the circuit scale. A transcoder including a decoder (1), a syntax conversion section (2), and an encoder (3) is used. The decoder (1) decodes video data compressively encoded in accordance with the MPEG-2 scheme, extracts motion vectors produced in accordance with the MPEG-2 scheme, and performs dequantization on the video data other the motion vectors. The syntax conversion section (2) converts the syntax of the video data obtained from the decoder (1) to the H.264 scheme. The encoder (3) quantizes the video data obtained as a result of syntax conversion and compressively encodes it along with the extracted motion vectors in accordance with the H.264 scheme. The encoder (3) adds a descriptor indicating that the motion vectors have been produced in accordance with the MPEG-2 scheme to the obtained data.

## Description

### Technical Field

The present invention relates to a transcoder and a transcoding method for transcoding video data, and, further, to a decoder and a decoding method for playing back video data obtained by transcoding.

### Background Art

The MPEG-2 scheme has heretofore been known as one of schemes used for compressive encoding of video. The MPEG-2 scheme allows for compressing video data while minimizing image quality deterioration, which is why it is used widely in various fields such as DVD, digital broadcasting, and the like.

In recent years, a new compressive encoding scheme called H.264 scheme has been developed. The H.264 scheme permits compressive encoding of video at higher compression ratios than the MPEG-2 scheme. For instance, when the same video data is encoded compressively at the same level of image quality using the MPEG-2 scheme and using the H.264 scheme, the data volume of the video data compressively encoded using the H.264 scheme will be approximately half the data volume obtained using the MPEG-2 scheme. Furthermore, the H.264 scheme has been adopted as the standard video format in "Blu-Ray Disc" and various portable terminal devices with video playback capability.

However, broadcasters, TV program producers, video producers, etc. have compressively encoded a huge amount of video assets in the past, using the MPEG-2 scheme. Thus, there is need for the development of a transcoder (coding conversion system) for H.264 scheme-based compressive re-encoding of video data compressively encoded using the MPEG-2 scheme.

Known transcoders that transcode video data compressively encoded using the MPEG-2 scheme (MPEG-2 video data) into video data compressively encoded using the H.264 scheme (H.264 video data) include transcoders utilizing the closed loop architecture (for example, see JP 2007-104231A). The transcoder disclosed in JP. 2007-104231A includes a decoder and an encoder.

The decoder successively performs variable-length decoding (VLD), dequantization, and an IDCT (inverse discrete cosine transform) on original MPEG-2 video data to generate playback video. The playback video is output to a buffer memory in the encoder. The encoder extracts the playback video stored in the buffer memory on a frame-by-frame basis and performs a DCT (discrete cosine transform), quantization, and variable-length coding on the extracted playback video to produce H.264 video data. Moreover, in order to perform motion compensation on the extracted playback video, the encoder generates motion vectors using a reference memory storing reference pictures and performs variable-length coding on the generated motion vectors. Furthermore, when generating motion information, the encoder also refers to motion information contained in the MPEG-2 video data.

In this manner, the transcoder disclosed in JP. 2007-104231Apermits the transcoding of MPEG-2 video data into H.264 video data, which makes it possible to reduce the volume of data to a half or less of the data volume of the original MPEG-2 video data. Accordingly, for example, equipping a hard disk recorder with the above-mentioned transcoder makes it possible to save hard disk space and record more titles. Moreover, video of superior image quality can be transmitted over networks with low transmission rates.

In addition, transcoders utilizing the open loop architecture are known as well (e.g. see Japanese Patent Publication No. 3244399). Such transcoders perform variable decoding and dequantization on original video data, carry out quantization on the resultant data by changing the quantization step value Q, and then perform variable coding. As a result, new video data is generated that is more compressed in terms of volume than the original video data.

### Disclosure of Invention

### Problem to be Solved by the Invention

This, however, requires substantial memory resources because, as described above, the buffer memory and the reference memory are indispensable in the former transcoders that make use of the closed loop architecture. Furthermore, large-scale circuits are required for implementing the above-described transcoders. Due to these issues, the former transcoders cannot be provided at a low cost.

Furthermore, in the former transcoders, the decoder needs to perform variable-length decoding, dequantization, and an inverse DCT and the encoder needs to perform a DCT, quantization, and variable-length coding. For this reason, with the above-mentioned transcoders, it is difficult to increase the speed of processing and the time to completion of transcoding may become longer than the playback time of the original video data.

On the other hand, in the latter transcoders that make use of the open loop architecture, there are no decoder-performed inverse DCT and encoder-performed DCT. For this reason, they do not require substantial memory resources and, furthermore, their circuit scale is small, which minimizes cost increase. Moreover, an increase in the speed of the transcoder can be readily achieved as well.

However, the latter transcoders are not designed for changing the schemes of compressive encoding and are intended only for the compression of the data volume of MPEG-2 video data. In other words, the latter transcoders do not perform transcoding with account taken of syntax and motion compensation differences between different compressive encoding schemes and are incapable of transcoding data from MPEG-2 video data to H.264 video data.

It is an object of the present invention to solve the above-mentioned problems and provide a transcoder and a transcoding method capable of inexpensive and fast transcoding of video data produced using different compressive encoding schemes, as well as a decoder and a decoding method used for decoding video data obtained with the help of this transcoder.

### Means for Solving Problem

In order to attain the above-described object, the transcoder of the present invention, which is a transcoder that decodes video data compressively encoded in accordance with a first compressive encoding scheme used for motion-compensated inter-frame differential coding and compressively re-encodes the video data in accordance with a second compressive encoding scheme, includes: a decoder, a syntax conversion section, and an encoder, the decoder decoding the video data compressively-encoded in accordance with the first compressive encoding scheme, extracting motion vectors produced in accordance with the first compressive encoding scheme from the decoded video data, inputting the extracted motion vectors to the encoder, and, in addition, performing dequantization on the decoded video data other than the motion vectors, and inputting the dequantized video data to the syntax conversion section; the syntax conversion section converting the syntax of the video data input by the decoder to the syntax specified in the second compressive encoding scheme; and the encoder performing quantization on the video data obtained by syntax conversion using a preset quantization step value, combining the quantized video data with the motion vectors input by the decoder and compressively encoding the quantized video data and the motion vectors input by the decoder in accordance with the second compressive encoding scheme, and adding a descriptor indicating that the motion vectors have been produced in accordance with the first compressive encoding scheme to the data compressively encoded in accordance with the second compressive encoding scheme.

In order to attain the above-described object, the transcoding method of the present invention, which is a transcoding method for decoding video data compressively encoded in accordance with a first compressive encoding scheme used for motion-compensated inter-frame differential coding and compressively re-encoding the video data in accordance with a second compressive encoding scheme, includes the steps of: (a) decoding the video data compressively encoded in accordance with the first compressive encoding scheme; (b) extracting motion vectors produced in accordance with the first compressive encoding scheme from the video data decoded in the step (a); (c) dequantizing the decoded video data other than the motion vectors; (d) converting the syntax of the video data dequantized in the step (c) to the syntax specified in the second compressive encoding scheme; (e) quantizing the video data obtained by syntax conversion in the step (d) using a preset quantizing step value; (f) combining the video data quantized in the step (e) with the motion vectors extracted in the step (b) and compressively-encoding the video data quantized in the step (e) and the motion vectors extracted in the step (b) in accordance with the second compressive encoding scheme; and (g) adding a descriptor indicating that the motion vectors have been produced in accordance with the first compressive encoding scheme to the data compressively encoded in accordance with the second compressive encoding scheme in the step (f).

In order to attain the above-described object, the decoder of the present invention, which is a decoder that generates decoded picture from video data obtained by compressive re-encoding by the above-described transcoder, includes a motion compensation section performing motion compensation based on motion vectors contained in the video data obtained by the compressive re-encoding, with the motion compensation section determining whether or not the transcoder has added a descriptor indicating that the motion vectors have been produced in accordance with the first compressive encoding scheme to the video data obtained by the compressive re-encoding and performing motion compensation in accordance with the first compressive encoding scheme when the descriptor has been added.

In order to attain the above-mentioned objective, the decoding method of the present invention, which is a decoding method for generating decoded picture from video data obtained by compressive re-encoding based on the above-mentioned transcoding method, includes the steps of: (a) determining whether or not a descriptor indicating that the motion vectors contained in the video data obtained by the compressive re-encoding have been produced in accordance with the first compressive encoding scheme has been added thereto; (b) performing motion compensation in accordance with the first compressive encoding scheme when it is determined in the step (a) that the descriptor has been added.

### Effects of the Invention

In accordance with the present invention, video data compressively-encoded in accordance with a first compressive encoding scheme used for motion-compensated inter-frame differential coding can be re-encoded in accordance with a second compressive encoding scheme. At such time, the motion vectors of the original video data are used as is and are not re-created. As a result, there is no need for substantial memory resources or large circuit scale as is the case when using the conventional closed loop architecture. Accordingly, the present invention minimizes transcoder-related cost increase. Moreover, under the present invention, a reduction in processing time is achieved because transcoding is made possible without taking a DCT (discrete cosine transform) and IDCT (inverse discrete cosine transform).

### Brief Description of Drawings

[FIG. 1] FIG. 1 is a block diagram illustrating an overall configuration of a transcoder used in an embodiment of the present invention.
[FIG. 2] FIG. 2 is a diagram illustrating a data structure of MPEG-2 video data.
[FIG. 3] FIG. 3 is a diagram illustrating an example of information necessary for motion compensation.
[FIG. 4] FIG. 4 is a diagram intended to explain a generation of predictive interpolation signals under a first compressive encoding scheme (MPEG-2 scheme).
[FIG. 5] FIG. 5 is a diagram intended to explain a generation of predictive interpolation signals under a second compressive encoding scheme (H.264 scheme).
[FIG. 6] FIG. 6 is a flow chart intended to explain a flow of processing in a transcoding method used in an embodiment of the present invention.
[FIG. 7] FIG. 7 is a block diagram illustrating an overall configuration of a decoder used in an embodiment of the present invention.
[FIG. 8] FIG. 8 is a flow chart intended to explain a flow of processing in the decoding method used in an embodiment of the present invention.

### Best Mode for Carrying Out the Invention

The transcoder of the present invention, which is a transcoder that decodes video data compressively encoded in accordance with a first compressive encoding scheme used for motion-compensated inter-frame differential coding and compressively re-encodes the video data in accordance with a second compressive encoding scheme, includes: a decoder, a syntax conversion section, and an encoder. The decoder decodes the video data compressively-encoded in accordance with the first compressive encoding scheme, extracts motion vectors produced in accordance with the first compressive encoding scheme from the decoded video data, inputs the extracted motion vectors to the encoder, and, in addition, performs dequantization on the decoded video data other than the motion vectors and inputs the dequantized video data to the syntax conversion section. The syntax conversion section converts the syntax of the video data input by the decoder to the syntax specified in the second compressive encoding scheme. The encoder performs quantization on the video data obtained by syntax conversion using a preset quantization step value, combining the quantized video data with the motion vectors input by the decoder, compressively encoding the quantized video data and the motion vectors input by the decoder in accordance with the second compressive encoding scheme, and adding a descriptor indicating that the motion vectors have been produced in accordance with the first compressive encoding scheme to the data compressively encoded in accordance with the second compressive encoding scheme.

The transcoding method of the present invention, which is a transcoding method for decoding video data compressively encoded in accordance with a first compressive encoding scheme used for motion-compensated inter-frame differential coding and compressively re-encoding the video data in accordance with a second compressive encoding scheme, includes the steps of: (a) decoding the video data compressively encoded in accordance with the first compressive encoding scheme; (b) extracting motion vectors produced in accordance with the first compressive encoding scheme from the video data decoded in the step (a); (c) dequantizing the decoded video data other than the motion vectors; (d) converting the syntax of the video data dequantized in the step(c) to the syntax specified in the second compressive encoding scheme; (e) quantizing the video data obtained by syntax conversion in the step(d) using a preset quantizing step value; (f) combining the video data quantized in the step(e) with the motion vectors extracted in the step(b) and compressively-encoding the video data quantized in the step(e) and the motion vectors extracted in the step(b) in accordance with the second compressive encoding scheme; and (g) adding a descriptor indicating that the motion vectors have been produced in accordance with the first compressive encoding scheme to the data compressively encoded in accordance with the second compressive encoding scheme in the step(f).

Moreover, the present invention may be a software program embodying the transcoder of the present invention described above. The transcoder of the present invention can be obtained by installing and running such a program on a computer. Furthermore, storage media used to store this program also constitute an embodiment of the present invention.

Moreover, the decoder of the present invention, which is a decoder that generates decoded picture from video data obtained by compressive re-encoding by the transcoder, includes a motion compensation section performing motion compensation based on motion vectors contained in the video data obtained by the compressive re-encoding, with the motion compensation section determining whether or not the transcoder has added a descriptor indicating that the motion vectors have been produced in accordance with the first compressive encoding scheme to the video data obtained by the compressive re-encoding and performing motion compensation in accordance with the first compressive encoding scheme when the descriptor has been added.

The decoding method of the present invention, which is a decoding method for generating decoded picture from video data obtained by compressive re-encoding based on the above-mentioned transcoding method, includes the steps of: (a) determining whether or not a descriptor indicating that the motion vectors contained in the video data obtained by the compressive re-encoding have been produced in accordance with the first compressive encoding scheme has been added thereto; (b) performing motion compensation in accordance with the first compressive encoding scheme when it is determined in the step(a) that the descriptor has been added.

Moreover, the present invention may be a software program embodying the decoder of the present invention described above. The decoder of the present invention can be obtained by installing and running such a program on a computer. Furthermore, storage media used to store this program also constitute an embodiment of the present invention.

In the present invention, the MPEG-2 scheme is suggested as the first compressive encoding scheme. Moreover, the H.264 scheme is suggested as the second compressive encoding scheme.

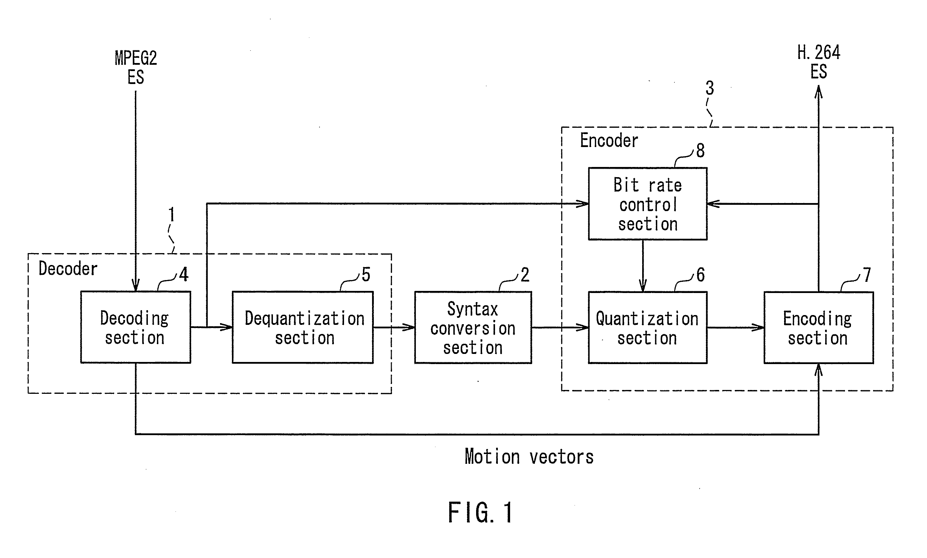

Below, a transcoder, a transcoding method, a decoder, and a decoding method used in an embodiment of the present invention are explained with reference to FIG. 1 to FIG. 8.

### [Explanations Regarding Transcoder and Transcoding Method]

First of all, FIG. 1 to FIG. 5 will be used to explain the configuration of the transcoder used in the present embodiment. FIG. 1 is a block diagram illustrating an overall configuration of a transcoder used in an embodiment of the present invention. As shown in FIG. 1, the transcoder used in the present embodiment includes a decoder 1, a syntax conversion section 2, and an encoder 3. In accordance with this configuration, video data compressively-encoded in accordance with a first compressive encoding scheme used for motion-compensated inter-frame differential coding are decoded and compressively re-encoded in accordance with a second compressive encoding scheme. In the present embodiment, the first compressive encoding scheme is the MPEG-2 scheme and the second compressive encoding scheme is the H.264 scheme.

The decoder 1 includes a decoding section 4 and a dequantization section 5. The decoding section 4 decodes the source video data to be converted via transcoding and generates data that is not yet compressively encoded. In the present embodiment, the target video data is MPEG-2 video data (MPEG-2 ES (Elementary Stream)) compressively-encoded in accordance with the MPEG-2 scheme, e.g. by Huffman coding. The decoding section 4 performs variable-length decoding (VLD: Variable Length Decoding).

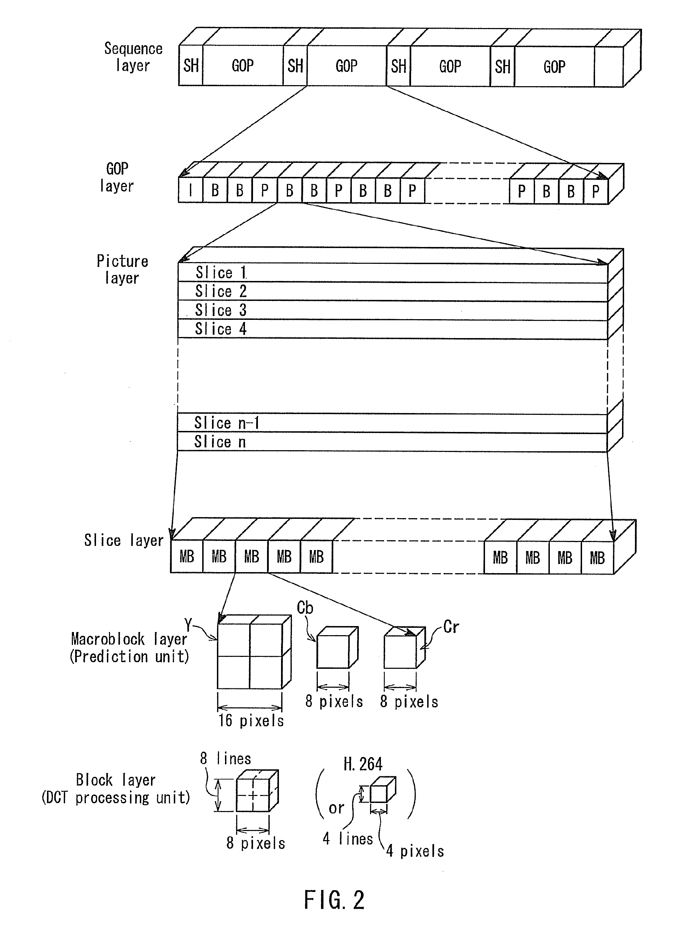

Moreover, the decoding section 4 extracts motion vectors produced in accordance with the MPEG-2 scheme from the decoded video data and inputs the extracted motion vectors directly to the encoder 3. Explanations regarding the motion vectors will be provided later with reference to FIG. 2 to FIG. 5.

The dequantization section 5 performs dequantization on the decoded video data. However, the dequantization performed by the dequantization section 5 is performed only on the decoded video data other than the motion vectors. The dequantization section 5 inputs the dequantized video data to the syntax conversion section 2.

The syntax conversion section 2 converts the syntax of the video data input by the dequantization section 5 of the decoder 2 to the syntax specified in the H.264 scheme. While pictures serve as units of coding under the MPEG-2 scheme, slices serve as units of coding under the H.264 scheme (see FIG. 2), with the syntax converted accordingly.

Specifically, the syntax conversion section 2 extracts sequence headers (SH: Sequence Header) from the source MPEG-2 video data to be converted as well as the picture headers added at the beginning of each picture (see FIG. 2). From these, the syntax conversion section 2 produces sequence parameter sets (SPS: Sequence Parameter Set) and picture parameter sets (PPS: Picture Parameter Set) as defined under the H.264 scheme.

Numbers are added to the SPS and PPS, respectively. The PPS to be used are identified by specifying PPS numbers in the slice headers added to the slices (see FIG. 2). The attribution of the slices to the sequences is established by specifying SPS numbers in the PPS. Moreover, the syntax conversion section 2 places these parameter sets before data that refers thereto.

In addition, the syntax conversion section 2 can add SEI (Supplemental Enhancement Information) and AU delimiters (Access Unit Delimiters). The SEI are headers containing random access information, timing information, and other additional information for each picture. The AU delimiters are codes used to identify the beginning of a picture.

The encoder 3 includes a quantization section 6 and an encoding section 7. The quantization section 6 uses a preset quantizing step value to quantize the video data obtained via syntax conversion by the syntax conversion section 2. The encoding section 7 combines the video data quantized by the quantization section 6 with the motion vectors input by the decoder 1 and compressively-encodes the video data quantized by the quantization section 6 and the motion vectors input by the decoder 1 in accordance with the H.264 scheme.

Specifically, the encoding section 7 performs compressive encoding using CAVLC (a context adaptive-type/modulation encoding scheme: Context-Adaptive Variable Length Coding) or CABAC (a context-adaptive binary arithmetic encoding scheme: Context-Adaptive Binary Arithmetic Coding).

In addition, the encoding section 7 adds a descriptor indicating that the motion vectors have been produced in accordance with the MPEG-2 scheme (in other words, that the motion vectors have not been produced in accordance with the H.264 scheme) to the re-encoded video data. Additionally, the video data re-encoded by the encoding section 7 (H.264 ES (Elementary Stream)) is output from the system.

Moreover, in the present embodiment, the encoder 3 includes a bit rate control section 8. The bit rate control section 8 obtains a target bit rate based on data produced by decoding by the decoding section 4 of the decoder 1 and video data produced by compressive encoding by the encoding section 7 of the encoder 3. The bit rate control section 8 then sets a quantizing step value (quotient value) intended to achieve the obtained bit rate and inputs the determined quantizing step value to the quantization section 6. When the quantizing step value is input, the quantization section 6 performs quantization using the input value.

Here, specific explanations regarding motion vectors will be provided with reference to FIG. 2 to FIG. 5. First of all, explanations will be provided regarding the overall configuration of MPEG-2 video data that contains motion vectors. FIG. 2 is a diagram illustrating a data structure of the MPEG-2 video data. As shown in FIG. 2, the MPEG-2 video data is composed of six layers (a hierarchy) including a sequence layer, a GOP (Group of Pictures) layer, a picture layer, a slice layer, a macroblock layer, and a block layer.

The sequence that constitutes the sequence layer is formed from one or more GOPs, a sequence header corresponding thereto, and a sequence end code (end code). Information identifying the characteristics of the moving picture sequence, for instance, the rectangular size of the image, aspect ratio, image rate, quantization matrix, etc., is contained in the sequence header.

The GOP that constitutes the GOP layer is composed of a set of multiple images (pictures). There are three kinds of pictures: I-pictures obtained by intra-frame coding, B-pictures obtained by bidirectional predictive coding, and P-pictures obtained by forward predictive coding.

The picture that constitutes the picture layer is composed of a single moving picture frame. A picture header, not shown, is added to each picture. Numbers indicating the display order of the pictures, codes identifying the type of the pictures, etc. are contained in the picture headers.

The slice that constitutes the slice layer is a set of multiple macroblocks (MB) obtained by segmenting a single picture into strips. Moreover, the macroblock layer is composed of a single macroblock, which forms part of a slice. The macroblock is a 16 pixels×16 lines square pixel block, composed of a luminance block Y and corresponding two 8 pixels×8 lines color difference blocks (Cb, Cr). Furthermore, the macroblock is subdivided into 8 pixels×8 lines blocks serving as DCT processing units, with said blocks constituting the block layer.

FIG. 2 shows MPEG-2 video data, but H.264 video data has roughly the same data structure. However, as described above, under the H.264 scheme, a slice serves as a unit of coding. Accordingly, different types of slices co-exist within a single picture. Furthermore, under the H.264 scheme, the unit of DCT processing is 4 pixels×4 lines in size, which further subdivides the macroblocks.

Moreover, motion compensation is carried out both in the MPEG-2 scheme and in the H.264 scheme. Motion vectors are obtained and encoded for each motion compensation block produced by dividing a moving picture frame. Under the MPEG-2 scheme, 16×16 is the only acceptable size for a motion compensation block. On the other hand, under the H.264 scheme, in addition to 16×16, other acceptable sizes for motion compensation blocks include 16×8, 8×16, 8×8, 8×4, 4×8, and 4×4.

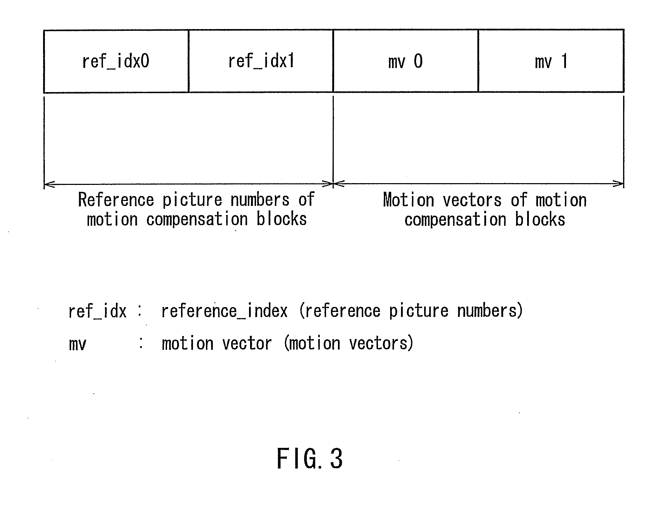

Information necessary for performing motion compensation is added to the macroblock layer. FIG. 3 is a diagram illustrating an example of information necessary for motion compensation. As shown in FIG. 3, both under the MPEG-2 scheme and under the H.264 scheme, the reference picture numbers of the motion compensation blocks and motion vectors of the motion compensation blocks are added to the macroblock layer in order to specify motion compensation.

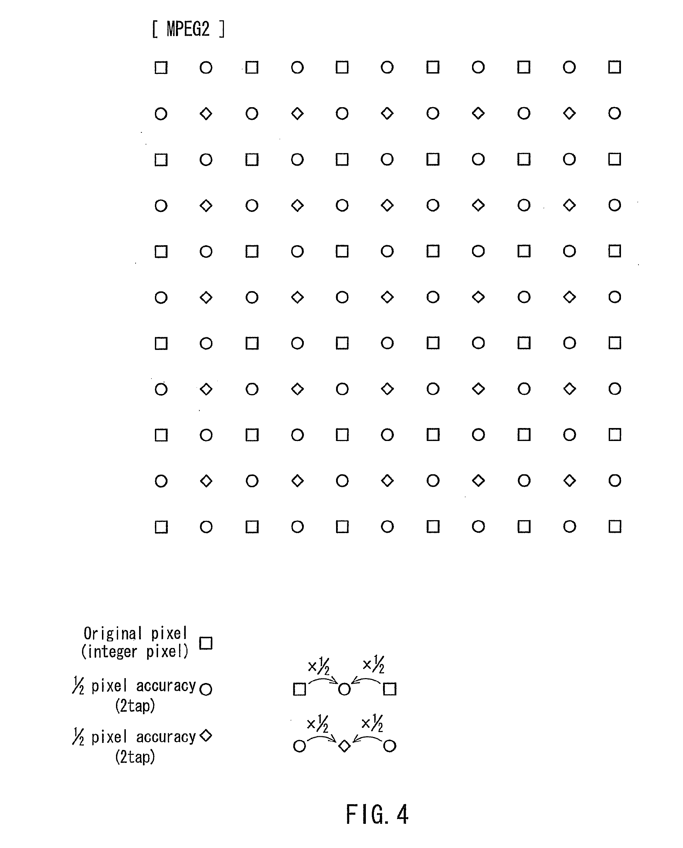

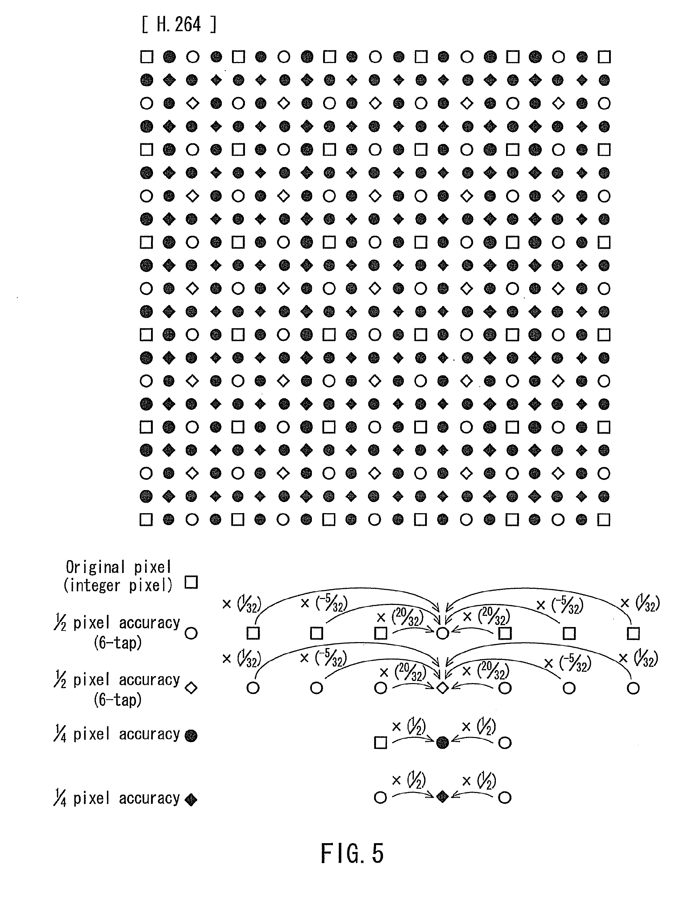

Moreover, in order to perform motion compensation, predictive interpolation signals are generated both in the MPEG-2 scheme and in the H.264 scheme. The predictive interpolation signals, which are signals having a pixel accuracy lower than the pixel accuracy of integer pixels, are generated based on the pixel values of the reference pictures. However, the methods used for generating predictive interpolation signals are different in the two schemes. This point is explained below by referring to FIG. 4 and FIG. 5.

FIG. 4 is a diagram intended to explain a generation of predictive interpolation signals under a first compressive encoding scheme (MPEG-2 scheme). FIG. 5 is a diagram intended to explain a generation of predictive interpolation signals under a second compressive encoding scheme (H.264 scheme).

As shown in FIG. 4, under the MPEG-2 scheme, the generation of predictive interpolation signals is carried out either by (○) using a two-tap (tap) filter to obtain an average value at a middle point between two adjacent integer pixel signals (□) or by (◇) obtaining an average value at the center of four integer pixel signals. Under the MPEG-2 scheme, motion vectors usually are represented at half-pixel accuracy.

On the other hand, as shown in FIG. 5, under the H.264 scheme, the generation of predictive interpolation signals is carried out using a six-tap (tap) filter. Specifically, a (1/2) pixel signal (○) at a middle location in the horizontal direction between two integer pixel signals (□) is produced by performing 6-tap filtering on six integer pixel signals arranged in the horizontal direction. In a similar manner, a (1/2) pixel signal (○) at a middle location in the vertical direction between two integer pixel signals (□) is produced by performing 6-tap filtering on six integer pixel signals arranged in the vertical direction.

In addition, a (1/2) pixel signal (◇) at a middle location between four integer pixel signals (□) is produced by performing 6-tap filtering on six (1/2) pixel signals (○) arranged in the horizontal or vertical direction. After the (1/2) pixel signals are produced, (1/4) pixel signals (• and ◆) are produced using an average value filter.

In this manner, there is a significant difference between the H.264 scheme and MPEG-2 scheme in terms of generating predictive interpolation signals. In comparison with the MPEG-2 scheme, under the H.264 scheme, the predictive accuracy of motion vectors is improved, which provides for more accurate motion compensation. However, for this reason, in the same manner as in case of transcoding based on the conventional closed loop architecture, transcoding completely motion vectors produced in accordance with the MPEG-2 scheme into motion vectors produced in accordance with the H.264 scheme requires a buffer memory and a reference memory. Namely, an IDCT (inverse discrete cosine transform) is taken after the MPEG-2 video data is dequantized and re-encoding is difficult if the resultant image is not loaded into memory.

By contrast, in the present embodiment, as shown in FIG. 1, after decoding the motion vectors, the decoder 1 outputs them to the encoder 3 as is. In the present embodiment, predictive interpolation signals are not re-created again. The encoder 3 then re-encodes the motion vectors without making changes. For this reason, the transcoder of the present embodiment does not require substantial memory resources or circuit scale, as is the case when the conventional closed loop architecture is used.

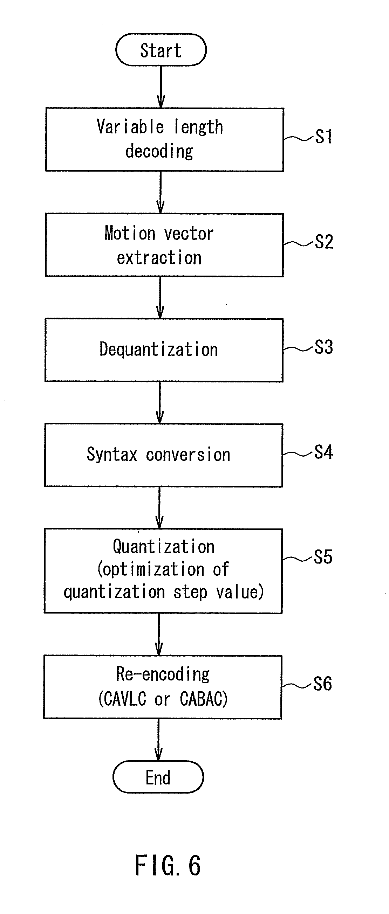

Next, the transcoding method of the present embodiment will be explained with reference to FIG. 6. FIG. 6 is a flow chart intended to explain a flow of processing in a transcoding method used in an embodiment of the present invention. The transcoding method of the present embodiment is implemented by operating the transcoder of the present embodiment illustrated in FIG. 1. For this reason, in the following explanations, the present embodiment will be described in conjunction with the operation of the transcoder illustrated in FIG. 1 by suitably referring to FIG. 1.

As shown in FIG. 6, first of all, when the source MPEG-2 video data (MPEG-2 ES) to be converted is input to the decoder 1, the decoding section 4 of the decoder 1 performs variable length decoding (VLD) (Step S1). Furthermore, the decoding section 4 extracts only motion vectors from the decoded MPEG-2 video data and inputs the extracted motion vectors to the encoder 3 (Step S2). The decoding section 4 inputs video data other than the motion vectors to the dequantization section 5.

Subsequently, the dequantization section 5 performs dequantization on the input video data (Step S3). In addition, the dequantization section 5 inputs the video data obtained by dequantization to the syntax conversion section 2. Next, the syntax conversion section 2 performs syntax conversion on the dequantized video data (Step S4). As a result, sequence parameter sets and picture parameter sets are produced as specified under the H.264 scheme and incorporated into the video data. The video data obtained by syntax conversion is input to the quantization section 6, which forms part of the encoder 3.

Next, when the video data is input, the quantization section 6 performs quantization on this video data using a preset quantization step value (Step S5). At such time, the setting of the quantization step value is carried out by the bit rate control section 8. As described above, the bit rate control section 8 sets the quantization step value (quotient value) such that a target bit rate is achieved. In addition, the quantization section 6 inputs the quantized video data to the encoding section 7, which forms part of the encoder 3.

After that, the encoding section 7 performs compressive re-encoding on the quantized video data in accordance with the H.264 scheme (Step S6). In addition, the encoding section 7 adds a descriptor to the video data obtained by the compressive re-encoding. The descriptor, which indicates that the motion vectors have been produced based on the compressive encoding scheme used prior to the transcoding (the MPEG-2 scheme), is written to the user area of the video data.

In this manner, the execution of Steps S1-S6 produces video data compressively re-encoded (transcoded) in accordance with the H.264 scheme. Moreover, as described above, there is no need for substantial memory resources or circuit scale during transcoding and, as a result, the present embodiment minimizes transcoding-related cost increase. In addition, in the present embodiment, transcoding is made possible without taking a DCT or IDCT, thereby achieving a reduction in processing time.

Additionally, the transcoder of the present embodiment can be implemented by installing a program used for carrying out Steps S1-S6 illustrated in FIG. 6 on a computer and running this program. In such a case, the CPU (central processing unit) of the computer effects processing by acting as the decoder 1, syntax conversion section 2, and encoder 3.

Incidentally, since the motion vectors of the video data output from the encoder 3 (see FIG. 1) upon execution of Step S6 (see FIG. 6) are produced in accordance with the MPEG-2 scheme, strictly speaking, this data is not entirely H.264 video data. Accordingly, image quality may deteriorate when motion compensation is performed in accordance with the H.264 scheme when the decoder plays back the transcoded video data.

However, the transcoded video data has the above-described descriptor added thereto. Therefore, when the transcoded video data is decoded, it is checked for the descriptor on the decoder side and, in the case that the descriptor is present, motion compensation is carried out in accordance with the encoding scheme used prior to the transcoding. In such a case, video is played back without image quality deterioration. The decoder and decoding method used in the present embodiment are explained below.

### [Explanations Regarding Decoder and Decoding Method]

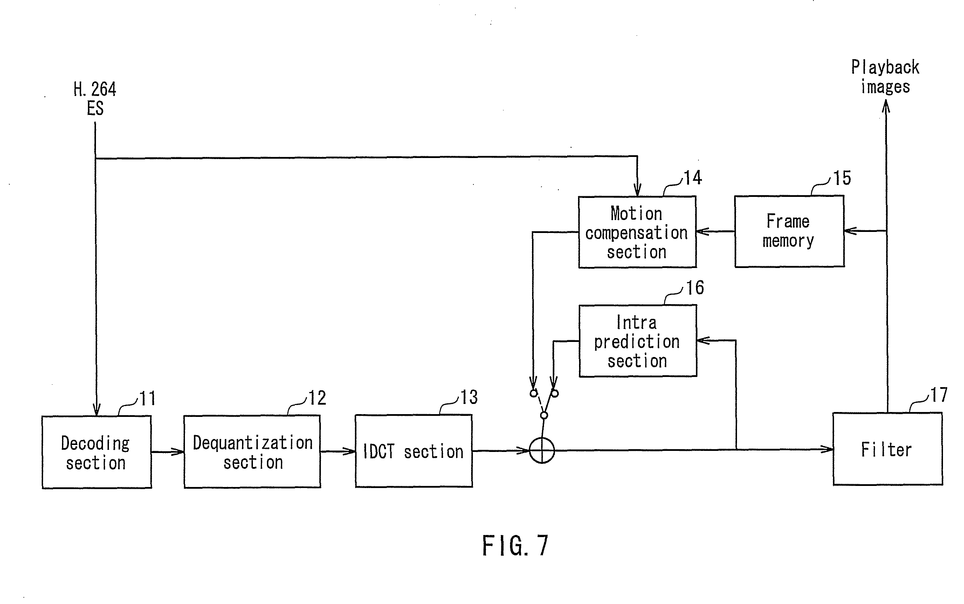

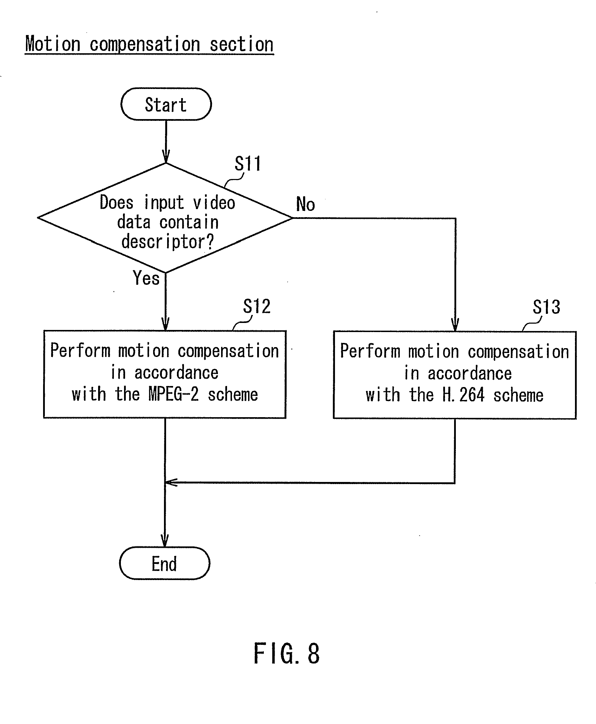

Next, the decoder and decoding method of the present embodiment will be explained with reference to FIG. 7 and FIG. 8. The decoder and decoding method used in the present embodiment are capable of generating decoded picture from video data obtained by re-encoding with the help of the transcoder and transcoding method of the present embodiment.

First of all, FIG. 7 will be used to explain the configuration of the decoder used in the present embodiment. FIG. 7 is a block diagram illustrating an overall configuration of a decoder used in an embodiment of the present invention. As shown in FIG. 7, the decoder includes a motion compensation section 14, which performs motion compensation based on motion vectors contained in video data obtained compressive re-encoding. In addition, the decoder also includes a decoding section 11, a dequantization section 12, an IDCT section 13, a frame memory 15, an intra prediction section 16, and a filter 17.

When H.264 video data (H.264 ES) is input, the decoding section 11 decodes (entropy-decodes) the data and inputs the decoded video data to the dequantization section 12. The dequantization section 12 dequantizes the decoded video data and inputs the dequantized video data to the IDCT section 13. The IDCT section 13 takes an ICDT (inverse discrete cosine transform) of the dequantized video data and outputs video data composed of pixel values.

The filter 17, which is a deblocking filter, removes block noise from the video data output by the IDCT section 13. While being output from the system as decoded picture, the video data, from which block noise have been removed by the filter 17, is stored in the frame memory 15. The intra prediction section 16 produces moving picture frames based on the video data output by the IDCT section 13 when original data is produced by predictive intra-coding.

The motion compensation section 14 performs motion compensation using the moving picture frames stored in the frame memory 15 and produces moving image frames. The moving picture frames produced by the intra prediction section 16 and moving picture frames produced by the motion compensation section 14 are incorporated into the video data output by the IDCT section 13 in the order of playback.

In addition, just like a motion compensation section provided in an H.264 decoder, the motion compensation section 14 normally performs motion compensation in accordance with the H.264 scheme. However, in the present embodiment, in addition to the functionality used for producing moving picture frames by performing motion compensation, the motion compensation section 14 is also provided with functionality for determining the presence of the descriptor. Furthermore, the motion compensation section 14 also is provided with functionality for performing motion compensation in accordance with the compressive encoding scheme used prior to transcoding, i.e. the MPEG-2 scheme, when it is determined that the descriptor has been added.

It should be noted when it is determined that no descriptor has been added, the motion compensation section 14, as described above, performs motion compensation in accordance with the H.264 scheme. The "descriptor", which is produced by the transcoder in the present embodiment illustrated in FIG. 1, indicates that the motion vectors have been produced in accordance with the MPEG-2 scheme.

Here, the decoding method of the present embodiment will be explained with reference to FIG. 8. FIG. 8 is a flow chart intended to explain a flow of processing in the decoding method used in an embodiment of the present invention. The decoding method of the present embodiment is implemented by operating the decoder of the present embodiment illustrated in FIG. 7. For this reason, in the following explanations, the present embodiment will be described in conjunction with the operation of the decoder illustrated in FIG. 7 by suitably referring to FIG. 7. In addition, FIG. 8 illustrates only motion compensation-related steps among the steps involved in the decoding method, that is to say, only steps executed by the motion compensation section 14.

As shown in FIG. 8, when video data is input, the motion compensation section 14 makes a determination as to whether or not the input video data contains a "descriptor" added by the transcoder (Step S11).

When, as a result of the determination made in Step S11, it is determined that the "descriptor" is contained in the data, the motion compensation section 14 performs motion compensation in accordance with the MPEG-2 scheme (Step S12). Specifically, in Step S12, the motion compensation section 14 generates moving picture frames with the proviso that the motion vectors are of half-pixel accuracy

On the other hand, when no "descriptor" is included, the motion compensation section 14 performs motion compensation in accordance with the H.264 scheme just like a motion compensation section provided in a regular H.264 decoder (Step S13). Specifically, in Step S13, the motion compensation section 14 generates moving picture frames with the proviso that the motion vectors are generated based on predictive interpolation signals obtained by 6-tap filtering.

It should be noted that the determination made in Step S11 is made at the start of video data input. Moreover, Steps S12 and S13 are performed until the input of video data to the decoder illustrated in FIG. 7 is complete.

In this manner, the decoder and decoding method of the present embodiment make it possible to play back video data compressively re-encoded using the transcoder and transcoding method of the present embodiment. In addition, the decoder and decoding method of the present embodiment make it possible to play back H.264 video data other than video data compressively re-encoded using the transcoder and transcoding method of the present embodiment.

Additionally, the decoder of the present embodiment can be implemented by installing a program used for carrying out Steps S11-S13 illustrated in FIG. 8, decoding, dequantization, IDCT, intra prediction, and deblocking filtering on a computer and running such a program. In this case, the CPU (central processing unit) of the computer effects processing by acting as the decoding section 11, dequantization section 12, IDCT section 13, motion compensation section 14, and intra prediction section 16. In addition, the memory of the computer operates as the frame memory 15.

### Industrial Applicability

The transcoder and transcoding method of the present invention are useful in various types of video equipment and possess industrial applicability. Furthermore, the decoder and decoding method of the present invention possess industrial applicability as a decoder and decoding method used for playing back video data compressively re-encoded with the help of the transcoder and transcoding method of the present invention.

## Claims

1. A transcoder for decoding video data compressively encoded in accordance with a first compressive encoding scheme used for motion-compensated inter-frame differential coding and compressively re-encoding the video data in accordance with a second compressive encoding scheme, comprising a decoder, a syntax conversion section, and an encoder,
wherein the decoder decodes the video data compressively-encoded in accordance with the first compressive encoding scheme, extracts motion vectors produced in accordance with the first compressive encoding scheme from the decoded video data, inputs the extracted motion vectors to the encoder, and, in addition, performs dequantization on the decoded video data other than the motion vectors, and inputs the dequantized video data to the syntax conversion section;
the syntax conversion section converts the syntax of the video data input by the decoder to the syntax specified in the second compressive encoding scheme; and
the encoder
performs quantization on the video data obtained by syntax conversion using a preset quantization step value,
combines the quantized video data with the motion vectors input by the decoder and compressively encoding the quantized video data and the motion vectors input by the decoder in accordance with the second compressive encoding scheme, and
adds a descriptor indicating that the motion vectors have been produced in accordance with the first compressive encoding scheme to the data compressively encoded in accordance with the second compressive encoding scheme.

2. The transcoder according to claim 1, wherein the first compressive encoding scheme is the MPEG-2 scheme and the second compressive encoding scheme is the H.264 scheme.

3. A transcoding method for decoding video data compressively encoded in accordance with a first compressive encoding scheme used for motion-compensated inter-frame differential coding and compressively re-encoding the video data in accordance with a second compressive encoding scheme, wherein the method comprises the steps of:
(a) decoding the video data compressively encoded in accordance with the first compressive encoding scheme;
(b) extracting motion vectors produced in accordance with the first compressive encoding scheme from the video data decoded in the step(a);
(c) dequantizing the decoded video data other than the motion vectors;
(d) converting the syntax of the video data dequantized in the step(c) to the syntax specified in the second compressive encoding scheme;
(e) quantizing the video data obtained by syntax conversion in the step(d) using a preset quantizing step value;
(f) combining the video data quantized in the step(e) with the motion vectors extracted in the step(b) and compressively-encoding the video data quantized in the step(e) and the motion vectors extracted in the step(b) in accordance with the second compressive encoding scheme; and
(g) adding a descriptor indicating that the motion vectors have been produced in accordance with the first compressive encoding scheme to the data compressively encoded in accordance with the second compressive encoding scheme in the step(f).

4. The transcoding method according to claim 3, wherein the first compressive encoding scheme is the MPEG-2 scheme and the second compressive encoding scheme is the H.264 scheme.

5. A decoder that generates decoded picture from video data obtained by compressive re-encoding by the transcoder according to claim 1, comprising a motion compensation section that performs motion compensation based on motion vectors contained in the video data obtained by the compressive re-encoding,
wherein the motion compensation section determines whether or not the transcoder has added a descriptor indicating that the motion vectors have been produced in accordance with the first compressive encoding scheme to the video data obtained by the compressive re-encoding and performs motion compensation in accordance with the first compressive encoding scheme when the descriptor has been added.

6. The decoder according to claim 5, wherein the first compressive encoding scheme is the MPEG-2 scheme and the second compressive encoding scheme is the H.264 scheme.

7. A decoding method for generating decoded picture from video data obtained by compressive re-encoding based on the transcoding method according to claim 3, comprising the steps of:
(a) determining whether or not a descriptor indicating that the motion vectors contained in the video data obtained by the compressive re-encoding have been produced in accordance with the first compressive encoding scheme has been added thereto; and
(b) performing motion compensation in accordance with the first compressive encoding scheme when it is determined in the step(a) that the descriptor has been added.

8. The decoding method according to claim 7, wherein the first compressive encoding scheme is the MPEG-2 scheme and the second compressive encoding scheme is the H.264 scheme.

9. A software program for executing, on a computer, a transcoding method for decoding video data compressively encoded in accordance with a first compressive encoding scheme used for motion-compensated inter-frame differential coding and compressively re-encoding the video data in accordance with a second compressive encoding scheme, wherein the program causes the computer to execute the steps of:
(a) decoding the video data compressively encoded in accordance with the first compressive encoding scheme;
(b) extracting motion vectors produced in accordance with the first compressive encoding scheme from the video data decoded in the step(a);
(c) dequantizing the decoded video data other than the motion vectors;
(d) converting the syntax of the video data dequantized in the step(c) to the syntax specified in the second compressive encoding scheme;
(e) quantizing the video data obtained by syntax conversion in the step(d) using a preset quantizing step value;
(f) combining the video data quantized in the step(e) with the motion vectors extracted in the step(b) and compressively-encoding the video data quantized in the step(e) and the motion vectors extracted in the step(b) in accordance with the second compressive encoding scheme; and
(g) adding a descriptor indicating that the motion vectors have been produced in accordance with the first compressive encoding scheme to the data compressively encoded in accordance with the second compressive encoding scheme in the step(f).

10. A software program for executing, on a computer, a decoding method for generating decoded picture from video data obtained by compressive re-encoding based on the transcoding method according to claim 3, wherein the program causes the computer to execute the steps of:
(a) determining whether or not a descriptor indicating that the motion vectors contained in the video data obtained by the compressive re-encoding have been produced in accordance with the first compressive encoding scheme has been added thereto; and
(b) performing motion compensation in accordance with the first compressive encoding scheme when it is determined in the step(a) that the descriptor has been added.
